# EUROPEAN PATENT APPLICATION

(11) **EP 0 595 492 A1**
(43) Date of publication of application: **04.05.1994**
(21) Application number: 93307941.0
(22) Date of filing: 06.10.1993
(51) Int. Cl.: C01G 23/02

(54) **Treatment of waste containing metal chlorides**

(30) Priority: 30.10.1992 GB 9222783
(71) Applicant: TIOXIDE GROUP SERVICES LIMITED, London W14 0QL (GB)
(72) Inventor: Gibson, Andrew Jon, Yarm, Cleveland (GB)
(74) Representative: Jackson, John Derek

(57) **Abstract**

A process for the treatment of waste containing metal chlorides comprises heating the waste in the presence of oxygen and water at a temperature of at least 350°C. The hydrogen chloride generated is passed through a gas scrubber in which any entrained solids are removed by contact of the gas with liquid aqueous hydrochloric acid. The process is particularly suitable for wastes generated during the chlorination of titaniferous ores. The process enables the chlorides to be converted to oxides which can be disposed of with minimal environmental impact or used as a source of trace elements and also provides a convenient means of generating relatively pure hydrogen chloride or hydrochloric acid.

## Description

This invention relates to a process for the treatment of waste containing hydrolysable metal chlorides and in particular to the treatment of waste such as that arising from the chlorination of titaniferous minerals.

The chlorination of titaniferous ores such as ilmenite or rutile to form titanium tetrachloride gives rise to waste products containing metal halides. These waste products contain soluble halides of environmental pollutants and may react with moist air to produce hydrogen chloride and therefore must be treated to render them suitable for disposal.

One method of treating this waste is neutralisation with, for example, calcium oxide or hydroxide and separation of the solids produced which are usually disposed of as landfill. In addition to the solid waste this process gives rise to significant quantities of aqueous liquors for disposal.

Alternatively this waste can be heated in the presence of oxygen and water. By this treatment substantially all the chlorides are converted to hydrogen chloride which is evolved as a gaseous stream and can, if desired, be absorbed by conventional means to produce hydrochloric acid. Heating has an advantage over neutralisation because the quantity of solids requiring disposal is less. However, some particulate oxides are carried over with the hydrogen chloride evolved and it is difficult to separate these efficiently from the gaseous stream. Therefore the hydrogen chloride and any hydrochloric acid produced is contaminated and generally unsuitable for sale or reuse.

It is an object of the current invention to provide a process for treating waste containing metal chlorides which process produces substantially pure hydrogen chloride which can be converted to substantially pure hydrochloric acid.

Accordingly, the invention provides a process for the treatment of waste containing hydrolysable metal chlorides, said process comprising heating said metal chlorides in the presence of oxygen and water at a temperature of at least 350°C to produce hydrogen chloride gas and passing the hydrogen chloride gas through a gas scrubber to remove entrained solids wherein the removal of entrained solids in said gas scrubber is effected by contact of the hydrogen chloride gas with liquid aqueous hydrochloric acid.

In a preferred embodiment of the process the stream of gas containing hydrogen chloride which emerges from the scrubber is absorbed in water to produce hydrochloric acid. Acid produced in this manner provides a convenient source of the hydrochloric acid which is used in the invention to effect the removal of solids in the scrubber.

The process is applicable to waste which contains hydrolysable metal chlorides from any source. It is particularly suitable for the treatment of residues which arise during the chlorination of titaniferous ores to produce titanium tetrachloride. Titaniferous ores frequently employed in such a process include natural or synthetic rutile, ilmenite and titaniferous slags and beneficiates. The waste from this process contains, for example, chlorides and oxychlorides of elements such as iron (ferrous and ferric chlorides), titanium, aluminium, vanadium, chromium, niobium, manganese, aluminium, zirconium and silicon as well as oxides of these elements. Generally, coke and carbonaceous residues will also be present in the waste.

The titaniferous ores are chlorinated, typically, in a fluidised bed reactor and, as well as the desired titanium tetrachloride, chlorides of other elements are produced and subsequently separated from the titanium tetrachloride. For example the unwanted chlorides can be separated by cooling the vapour from the fluidised bed and passing it through a cyclone in which they are collected as solids. Typically, the vapourised mixed metal chlorides are cooled by spraying titanium tetrachloride into the vapour stream to a temperature at which the titanium tetrachloride remains as a vapour but most of the unwanted chlorides condense to solids. A number of other separation methods are known and the process of this invention is generally suitable for use with waste obtained by any of these means.

The waste is heated in the presence of oxygen with the object of converting substantially all the chlorides present to oxides. Any gas containing oxygen can be used but, for economy, it is preferred to heat the waste in the presence of air.

Water is also present during the heating to hydrolyse the chlorides and form hydrogen chloride. The water may be added in any convenient way but advantageously it is sprayed onto the heated chlorides. In a preferred embodiment of the invention liquors containing hydrogen chloride which arise as a result of scrubbing gaseous effluent from a plant producing titanium dioxide by the "chloride" route are used as a source of water. This is advantageous since these scrubber liquors are thereby disposed of economically in an environmentally acceptable manner.

The waste can be heated by any suitable means, such as supplying heat to the exterior or interior of a vessel containing the waste. Preferably, a fuel such as natural gas is supplied to a bed of the waste and burned in the bed to produce the desired temperature.

When the waste contains carbonaceous material it is preferable to ensure that the conditions during heating are appropriate to cause oxidation of this material which therefore acts as a fuel and assists the heating of the waste.

The waste is heated to a temperature of at least 350°C to cause conversion into oxides and hydrogen chloride. When carbonaceous material in the waste is employed as a fuel it is preferable to heat the waste above 650°C to ensure ignition of the carbonaceous material. Most preferably, the waste is heated at a temperature between 650°C and 950°C.

The amount of oxygen used will depend upon the composition of the waste. Preferably sufficient oxygen to fully convert all the oxidisable portion (principally carbonaceous material) to oxides is used but it is inefficient to employ more than a small excess over this amount.

The amount of water added to the waste also depends upon the composition of the waste and is at least sufficient to hydrolyse all the hydrolysable chlorides. Typically, for treatment of waste from the chlorination of titaniferous material the amount of water will be between 10 and 35% by weight and frequently is from 10 to 30% by weight with respect to weight of the waste. When a scrubber liquor containing hydrogen chloride is added as a source of water, the amount of liquor is usually higher than the amount of pure water which is suitable. Typically the amount of liquor used is up to 80% of the weight of the waste.

The waste may be treated in a batch process or continuous process but preferably the waste is heated in a fluidised bed to which waste is continuously added and from which oxides are continuously removed.

The gaseous product stream from the heating step comprises a mixture of gases generally including carbon dioxide, nitrogen and hydrogen chloride and also entrained particulate material from the waste. Although some of this particulate material is normally removed from the gaseous stream by passing the stream through one or more cyclone separators, complete removal is generally not economically feasible.

The process of the invention employs a gas scrubber in which the gaseous stream is contacted with aqueous hydrochloric acid to ensure substantially complete removal of these solids. A particularly suitable form of gas scrubber is a jet scrubber in which liquid aqueous hydrochloric acid is sprayed cocurrently or counter-currently into the hydrogen chloride gaseous stream through one or more venturi tubes.

Within the scrubber an equilibrium is established between liquid and gaseous aqueous hydrochloric acid in which substantially all the solids are associated with the liquid phase either as suspended particles or in solution. The liquid phase is advantageously returned to the vessel in which the waste is heated and the gaseous phase is removed for subsequent use. In the preferred embodiment of the invention the gaseous phase is used for the production of liquid hydrochloric acid.

The hydrochloric acid employed in the gas scrubber can be obtained from any convenient source but it is particularly convenient to recycle a portion of any final product hydrochloric acid generated from the hydrogen chloride gas stream which results from the process of the invention. Generally, this hydrochloric acid contains more than 25% and preferably between 30 and 50% by weight hydrogen chloride. Most preferably, the concentration of hydrogen chloride is from 30 to 35% by weight.

Generally, the liquid phase within the scrubber is recirculated through the venturi tube or tubes and it is important that the solids present in this phase do not form a deposit within the scrubber or restrict the flow of the liquid phase. Usually, therefore, the scrubber is operated under conditions which ensure that the liquid phase contains less than 10 per cent by weight solids.

As stated hereinbefore an equilibrium is established in the scrubber between a gaseous phase and a liquid phase. The liquid hydrochloric acid which is contacted with the gaseous stream from the heating step is caused to evaporate by the hot gaseous stream and this evaporation effects a cooling of the gaseous stream. The temperature and flow rate of the gaseous stream therefore largely determines the conditions which exist when equilibrium is achieved. Typically, however, the scrubber operates under conditions which result in an exit gas temperature in the range 80°C to 120°C. The amount of liquid hydrochloric acid which is introduced into the scrubber is preferably adjusted so that sufficient is added to satisfactorily establish the equilibrium but any excess above this amount is minimised. However, some liquid hydrochloric acid is removed from the scrubber together with the solids which have been removed from the gaseous stream. Therefore the amount of any excess liquid hydrochloric acid added is at least sufficient to compensate for this removed liquid. A typical feed rate for the liquid hydrochloric acid added to the scrubber is from 100 to 150 grams of acid per cubic metre of gaseous stream fed to the scrubber. Usually, the liquid level and solids concentration is controlled by controlling the rate at which the liquid containing solids is removed from the scrubber.

Usually, the scrubber is operated adiabatically so that the equilibrium conditions are determined by the temperature, pressure and flow rates of the gaseous stream and the aqueous hydrochloric acid which are input to the scrubber. However, it is possible to heat or cool either the gaseous stream or the liquid hydrochloric acid to adjust the equilibrium conditions.

When it is desired to generate hydrochloric acid the hydrogen chloride gas stream emerging from the scrubber is subsequently treated by conventional means such as condensation and absorption of the hydrogen chloride present to produce hydrochloric acid. Preferably the hydrogen chloride is absorbed in hydrochloric acid containing at least 25% hydrogen chloride by weight since this enables a readily saleable acid to be produced without further treatment.

Alternatively, the whole or part of the gas stream emerging from the scrubber is used to provide feedstock for further processing such as the catalytic production of chlorine. The gaseous product of this process is particularly useful as such feedstock in which the presence of metal compounds and solid particulates is undesirable.

When the process is operated with continuous generation of hydrochloric acid, product hydrochloric acid is continuously removed from the process and water is continuously added to maintain a substantially constant concentration of product acid.

The gases such as nitrogen and carbon dioxide which are not absorbed when hydrochloric acid is formed are scrubbed to remove any traces of hydrogen chloride before emission to the atmosphere and the water used for this scrubbing will generally form at least a part of that added to maintain a constant concentration of product acid.

The process enables the obnoxious chlorides produced as waste in such processes as the chlorination of titaniferous ores to be safely disposed of with minimal environmental impact and a useful source of hydrogen chloride is provided for conversion to hydrochloric acid or for use in other chemical processes. Hydrochloric acid produced by the preferred process is of sufficiently high purity to be saleable for use in chemical processes and the use of hydrochloric acid to remove entrained solids from the gaseous products of oxidation enables the preparation of hydrochloric acid at a concentration above the azeotropic concentration, effectively removing the need for further treatment before sale. The metal chlorides are converted to solid oxides which can be readily disposed of or further treated, where possible, to extract valuable products such as compounds of vanadium, manganese and niobium.

The process is illustrated by the following examples.

### EXAMPLE 1

An apparatus for carrying out the process of the invention operates under steady state conditions as follows.

2500 kilogrammes per hour of dust separated from the cooled exit gas from a fluid bed chlorinator which forms part of a chloride route process plant for the production of titanium dioxide is fed into a fluid bed roaster. The dust contains 20% by weight elemental carbon, 24% iron chlorides, 36% other metal chlorides, the balance being various metal oxides, mostly elutriated material carried over from the chlorination reactor. The fluid bed roaster, in which the carbon is combusted and the various metal chlorides are hydrolysed to form hydrogen chloride and metal oxides, operates at 950°C exit gas temperature and at atmospheric pressure. Water for the hydrolysis reaction is fed to the roaster in the form of 2340 kilogrammes per hour of contaminated hydrochloric acid, composed of 2090 kg per hour of contaminated 18% hydrochloric acid from the effluent gas cleaning section of the chloride route process plant and 250 kg per hour of contaminated acid returned from the roaster exit gas scrubber detailed below. The roaster is also fed with 5700 cubic metres per hour of atmospheric air, which serves both as a fluidising gas and as a source of oxygen for the carbon combustion.

1450 kg per hour of solids, composed almost entirely of inert metal oxides, are taken hot from the roaster, allowed to cool and then disposed of in a suitable manner.

Approximately 35000 cubic metres per hour of gas leaves the roaster, composed largely of nitrogen and carbon dioxide and containing approximately 1230 kg per hour of gaseous hydrogen chloride and 1800 kg per hour of water vapour. This passes through a gas cyclone designed to separate most of the entrained solids, which are returned via an airlock to the roaster bed, and into the gas scrubbing system. The gas cyclone comprises two jet scrubber units, both mounted above a tank which serves as a common liquid reservoir. The process gas passes first through the co-current "cooling" scrubber and then via the vapour space in the common tank to the counter-current "cleaning" scrubber. Liquid from the tank, which consists of approximately 26% hydrochloric acid with 10% by weight dissolved and suspended solids, is recirculated to both jet scrubbers. 250 kg per hour of this liquid is taken off and returned to the roaster as a means of removing the captured solids from the scrubbing system. In addition a considerable quantity of the liquor is evaporated to join the process gas phase as it is cooled and becomes saturated. This liquid loss is made up by a feed to the reservoir tank of approximately 4100 kg per hour of clean 35% product acid.

16000 cubic metres per hour of process gas leave the scrubber system at about 93°C, saturated with hydrochloric acid vapour with a condensed acid strength of roughly 38% by weight HCl. This is fed to a two stage absorber/condenser system designed to remove the majority of the hydrogen chloride from the process gas. The first absorption/condensation stage incorporates a 5.7 MW cooler while the second is fed with 560 kg per hour of clean process water. Approximately 660 kg per hour of relatively weak (24%) hydrochloric acid is fed from the second stage to the first stage. 7400 kg per hour of clean, 35% hydrochloric acid product is removed from the first stage and fed into a product tank, from which scrubber system make-up liquor is taken as described above. The equivalent of about 3300 kg per hour of product acid is taken from the product tank for sale or use. 5400 cubic metres per hour of process gas leaves the absorbtion/condensation system contaminated with a low level (approximately 2000 parts per million) of hydrogen chloride. This is fed into the titanium dioxide process plant gaseous effluent cleaning system, and eventually the hydrogen chloride returns as part of the liquor fed to the roaster.

### EXAMPLE 2

Approximately 6 litres per minute of air was fed from a compressed air supply via a preheater to a 50 mm diameter silica-walled fluidised bed reactor with a sintered glass distributor within it and an electrical heater surrounding it. This reactor was charged with an initial bed of silica sand (300 grams) which was fluidised by the feed air. Into the bed of the reactor roughly 2.5 millilitres per minute of water and 4.5 grams per minute of a waste product from the manufacture of titanium dioxide consisting of a mixture of metal chlorides, metal oxides and carbon were fed through gas purged feeds. The reactor was heated to and maintained at a temperature of approximately 800°C.

The resulting product gas was fed to a glass cyclone which removed some of the entrained bed material from the gas stream into a glass storage flask. Outlet gas from the cyclone was directed to a venturi-type scrubbing unit arranged above a glass circulating liquor pot which was initially charged with 31% hydrochloric acid solution. Liquor was circulated from this pot to the venturi at a rate sufficient to give good wall-to-wall spray using a peristaltic pump capable of delivering 270 millilitres per minute through a 3 mm hose. The venturi was a small glass jet scrubber-type unit with a 1.5 mm throat and with the circulating liquor entering via a 1 mm internal diameter glass tube with as narrow a nozzle as practicable pointing at the throat and about 1 cm from it along the unit centre line.

The scrubbed gas stream entered a cooler/condenser, condensate from which was collected in a glass flask. The condenser unit consisted of a 50 mm diameter, 380 mm long glass tube containing a 250 mm long coil of glass tubing through which was fed tap water as a coolant. Final-off gas from this passed to an effluent gas cleaning train consisting of two gas bubble bottles in series, each initially charged with 100 millilitres of demineralised water, followed by a 300 mm diameter packed scrubbing column with caustic soda liquor recirculating in a closed loop.

The liquid and solid products of the process were collected as described above and samples of them were analysed for chloride/chlorine and for various metals (Fe, Al, Mg, Mn and Ti). Selected samples were also analysed for carbon. Using the results of these analyses a mass balance was obtained, a summary of which follows.

A total weight of 250 grams of metal chloride/oxide mixture containing carbon was fed to the fluidised bed over 55 minutes. The chloride content of this mixture was calculated to be 73 grams chlorine, principally in bonded/ionic form. At the end of the run 0.15% of this (0.11 gram) was found in the final bed material and 2.0% (1.5 grams) was found in the dust collected from the cyclone. 8.5 grams of the chlorine originally placed in the scrubber recirculating pot as a 31% solution of HCl evaporated to join the process stream. 12.5% of the total chlorine was collected in the condensed liquor pot and a further 45.4% was found in the gas bubble bottles. The remainder was estimated to have been collected in the caustic soda scrubber used to scrub the effluent gases.

The metal chloride/oxide mixture was calculated to contain 67 grams metals in total. 50% (33.5 grams) was found in the final bed material and 45% (30.2 grams) in the dust collected from the cyclone. A further 1.2% (0.8 grams) was collected in the scrubber recirculating liquor. Only 0.01% of the metals was detected in the condensed acid and 0.04% in the gas bubble bottles.

The initial feed contained 20 grams of carbon of which 0.4% (0.08 grams) remained in the final bed and 15% (3.0 grams) was detected in the cyclone dust.

A total of 34 ml hydrochloric acid was collected in the condenser unit. This was found to contain 307 grams per litre HCl (approximately 26% by weight). The iron content of this hydrochloric acid was approximately 100 ppm and the total metal content was about 150 ppm. The acidic solutions formed in the gas bubble bottles also contained about 100 ppm iron.

### EXAMPLE 3

The apparatus described in Example 2 was modified by the addition of a 50mm diameter scrubbing column, packed to a depth of 100mm with glass beads supported by a coarse glass wool plug, onto the gas outlet from the jet scrubber recirculation pot. Scrubbing liquor was circulated over the packing of this column from the same recirculating liquor pot as for the jet scrubber. A third gas bubble bottle was added to the gas bubble train. This apparatus was operated with feeds similar to those in the second example, but with a water feed to the reactor of 1.5 grams per minute.

A mass balance was derived for this example as for Example 2.

A total of 315 grams of metal chloride/oxide mixture with carbon was fed over a period of 78 minutes. The chloride content of this mixture was calculated to be 93 grams of chlorine, principally in bonded/ionic form. At the end of the run 0.09% (0.08g) was found in the final bed material. 6.8 grams of the chlorine originally placed in the scrubber recirculating liquor pot as a solution of HCl evaporated to join the process gas stream. Of the total acid in the stream leaving the second scrubber 1.5% was found in the condensed liquor pot and a further 45% in the gas bubble bottles.

The metal chloride/oxide mixture was calculated to contain 85 grams of total metals. 65.8% (55.9g) was found in the final bed material and 37.3% (31.7g) in the cyclone dust; 1.0% (0.85g) was detected in the scrubber recirculating liquor, less than 0.01% in the condensed acid and 0.09% in the gas bubble bottles.

The initial feed contained 23.5 grams carbon of which 0.34% (0.1g) was found in the final bed and 12.3% (2.9g) in the cyclone dust. Less than 0.5% was detected in the scrubber liquor.

3.5 ml of liquid was collected in the condenser unit. The composition of this liquid was 339 grams per litre of HCl, 0.036 grams per litre of total iron (approximately 33 ppm) and 0.075 grams per litre of total metals (approximately 68 ppm). This represents a relatively pure 31% HCl solution.

The three gas bubble bottles held a total of 300ml of pure water to begin with. The final liquid (approximately 300ml) included 36 grams of chloride (equivalent to 12% HCl) and approximately 110 ppm of iron.

## Claims

1. A process for the treatment of waste containing hydrolysable metal chlorides, said process comprising heating said metal chlorides in the presence of oxygen and water at a temperature of at least 350°C to produce hydrogen chloride gas and passing said hydrogen chloride gas through a gas scrubber to remove entrained solids characterized in that the removal of entrained solids in said gas scrubber is effected by contact of the hydrogen chloride gas with liquid aqueous hydrochloric acid.

2. A process according to claim 1 characterized in that the hydrogen chloride gas, after removal of solids in the gas scrubber is absorbed in water to produce hydrochloric acid.

3. A process according to claim 1 or 2 characterized in that the waste comprises residues which have arisen during the chlorination of titaniferous ores.

4. A process according to any one of the preceding claims characterized in that scrubber liquors which contain hydrogen chloride and which are generated by scrubbing the gaseous effluent from a plant in which titanium dioxide is prepared from titanium tetrachloride are used as a source of water.

5. A process according to any one of the preceding claims characterized in that a fuel is supplied to a bed of the waste and said fuel is burned to produce the desired temperature.

6. A process according to any one of the preceding claims characterized in that carbonaceous material is present in the waste and the waste is heated under conditions which ensure that the carbonaceous material is utilised as a fuel to assist in heating the waste.

7. A process according to any one of the preceding claims characterized in that the waste is heated at a temperature between 650°C and 950°C.

8. A process according to claim 3 characterized in that the water is added in an amount between 10 and 35 per cent by weight with respect to weight of the waste.

9. A process according to any one of the preceding claims characterized in that entrained material is removed from the hydrogen chloride gas by means of at least one cyclone separator before the gas is passed to the gas scrubber.

10. A process according to any one of the preceding claims characterized in that the scrubber is a jet scrubber and the liquid aqueous hydrochloric acid is sprayed cocurrently or countercurrently into the hydrogen chloride gas through at least one venturi tube.

11. A process according to any one of the preceding claims characterized in that a liquid phase separates in the scrubber and this liquid phase is recirculated through a venturi tube within the scrubber.

12. A process according to claim 11 characterized in that the scrubber is operated under conditions which ensure that the liquid phase contains less than 10 per cent by weight solids.

13. A process according to any one of the preceding claims characterized in that the aqueous hydrochloric acid contains more than 25 per cent by weight hydrogen chloride.

14. A process according to any one of the preceding claims characterized in that the temperature of the hydrogen chloride gas at the exit from the scrubber is in the range 80°C to 120°C.

15. A process according to any one of the preceding claims characterized in that liquid hydrochloric acid is introduced into the scrubber at a rate of from 100 to 150 grams of acid per cubic metre of gaseous stream fed to the scrubber.

16. A process according to any one of the preceding claims characterized in that the scrubber is operated adiabatically.
